# EUROPÄISCHE PATENTSCHRIFT

(11) **EP 1 004 818 B1**
(45) Veröffentlichungstag und Bekanntmachung des Hinweises auf die Patenterteilung: **08.10.2003**
(21) Anmeldenummer: 99122983.2
(22) Anmeldetag: 19.11.1999
(51) Int. Cl.: F21S 8/10

(54) **Fahrzeugleuchte**
Vehicle light
Feu pour véhicule

(30) Priorität: 25.11.1998 DE 19854303
(43) Veröffentlichungstag der Anmeldung: 31.05.2000
(73) Patentinhaber: Hella KG Hueck & Co., 59552 Lippstadt (DE)
(72) Erfinder: Dünschede, Elmar, 33102 Paderborn (DE); Merkelbach, Frank, Dr., 59597 Erwitte (DE); Leinwand, Peter, 44329 Dortmund (DE); Weddemann, Heribert, 59558 Lippstadt (DE)

(56) Entgegenhaltungen:
- EP-A- 0 404 629
- DE-A- 19 647 357
- PATENT ABSTRACTS OF JAPAN vol. 016, no. 051 (M-1209), 10. Februar 1992 (1992-02-10) & JP 03 254004 A (STANLEY ELECTRIC CO LTD), 13. November 1991 (1991-11-13)
- PATENT ABSTRACTS OF JAPAN vol. 1995, no. 09, 31. Oktober 1995 (1995-10-31) & JP 07 161205 A (STANLEY ELECTRIC CO LTD), 23. Juni 1995 (1995-06-23)
- PATENT ABSTRACTS OF JAPAN vol. 1995, no. 06, 31. Juli 1995 (1995-07-31) & JP 07 065607 A (STANLEY ELECTRIC CO LTD), 10. März 1995 (1995-03-10)

## Beschreibung

Die Erfindung betrifft eine Fahrzeugleuchte mit mindestens einer Lichtfunktion, mit einem Gehäuse, mit einer Lichtquelle in dem Gehäuse und mit einer das Gehäuse abschließenden Abschlußscheibe, wobei zwischen Lichtquelle und Abschlußscheibe eine lichtsammelnde Linsenanordnung angeordnet ist, zwischen der Lichtquelle und der lichtsammelnden Linsenanordnung eine lichtstreuende Linsenanordnung angeordnet ist, die lichtsammelnde Linsenanordnung eine Fresnellinse ist, die gegenüber der optikfreien Abschlußscheibe (A) räumlich zurückversetzt im Gehäuse angeordnet ist und die lichtstreuende Linsenanordnung die Lichtquelle kappenförmig umgibt

Aus der Deutschen Offenlegungsschrift DE 196 47 357 A1 ist eine Fahrzeugleuchte bekannt, die ein Gehäuse aufweist, das von einer Abschlußscheibe abgedeckt wird. In dem Gehäuse ist eine Lichtquelle angeordnet. In dem Strahlengang zwischen der Lichtquelle und der Abschlußscheibe ist eine lichtsammelnde Linsenanordnung angeordnet, die als eine Fresnellinse ausgebildet ist. Die Fresnellinse ist dabei gegenüber der Abschlußscheibe räumlich zurückversetzt im Gehäuse angeordnet. Die Abschlußscheibe weist bei dem bekannten Stand der Technik lichtstreuende und/oder lichtsammelnde Linsenelemente auf, um in Kombination mit der Fresnellinse die vorgegebene Lichtverteilung der Fahrzeugleuchte und der ihr zugeordneten Lichtfunktion zu erzielen. Nachteilig erweist sich bei dieser bekannten Fahrzeugleuchte, daß durch die Linsenelemente in der Abschlußscheibe ein brillantes Erscheinungsbild der Leuchte nicht gegeben ist, da die Linsenelemente den freien Einblick von außen in die Leuchte verhindern.

Aus der japanischen Patentanmeldung JP 03 25 40 04 ist eine Fahrzeugleuchte mit mindestens einer Lichtfunktion mit einem Gehäuse, mit einer Lichtquelle in dem Gehäuse und mit einer das Gehäuse abschließenden Abschlussscheibe bekannt,
wobei zwischen Lichtquelle und Abschlußscheibe eine lichtsammelnde Linsenanordnung angeordnet ist, die lichtsammelnde Linsenanordnung eine Fresnetlinse ist, die gegenüber der Abschtußscheibe räumlich zurückversetzt im Gehäuse angeordnet ist und die lichtstreuende Linsenanordnung, die Lichtquelle kappenförmig umgibt. Die Abschlußscheibeder bekannten Fahrzeugleuchte wird in JP 03 25 40 04 als "lens" bezeichnet, woraus abzuleiten ist, daß diese eine optische Wirkung aus übt und dem = zufolge mit optische Elemente versehen ist. Solche Elemente verhindern den freien Blick in die Leuchte hinein. Somit weist die bekannte Fahrzeugleuchte ein mangel = holes brillantes Erscheinungsbild auf.

Aus dem Dokument EP 404 629 A1 ist eine Fahrzeugleuchte mit mindestens zwei zwischen Lichtquelle und Streuscheibe angeordneten Linsenanordnungen bekannt, wobei eine der Linsenanordnungen als Fresnellinse mit einem zentralen Optikbereich ausgebildet ist, indem die Linsenelemente konzentrisch angeordnet sind.

Der Erfindung liegt die Aufgabe zugrunde, eine Fahrzeugleuchte zu schaffen, die bei einem einfachen technischen Aufbau ein brillantes Erscheinungsbild aufweist.

Die Aufgabe wird erfindungsgemäß durch die Merkmale des Anspruchs 1 gelöst.

Es ist von Vorteil, daß die Abschlußscheibe der mindestens einen Lichtfunktion optikfrei ausgebildet ist, weil somit ein freier Einblick in die Leuchte ermöglicht wird und ein brillantes Erscheinungsbild erreicht wird.

Es ist von besonderem Vorteil, die Lichtquelle als farbige Lichtquelle auszubilden und/oder die lichtsammelnde Linsenanordnung und/oder die lichtstreuende Linsenanordnung als Farbfilter zu gestalten, weil somit der Vorteil erzielt wird, daß die Leuchte im ausgeschalteten Zustand eine beliebige Farbgestaltung aufweisen kann, die unabhängig von der Signalfunktion der Fahrzeugleuchte ist.

Ein Ausführungsbeispiel ist in den Figuren dargestellt und wird im folgenden anhand der Figuren kurz beschrieben.

Es zeigen
Figur 1: einen Schnitt durch eine erfindungsgemäße Fahrzeugleuchte;
Figur 2: eine kappenförmige lichtstreuende Linsenanordnung in Vorderansicht;
Figur 3: einen Schnitt durch eine kappenförmige lichtstreuende Linsenanordnung gemäß Figur 2.

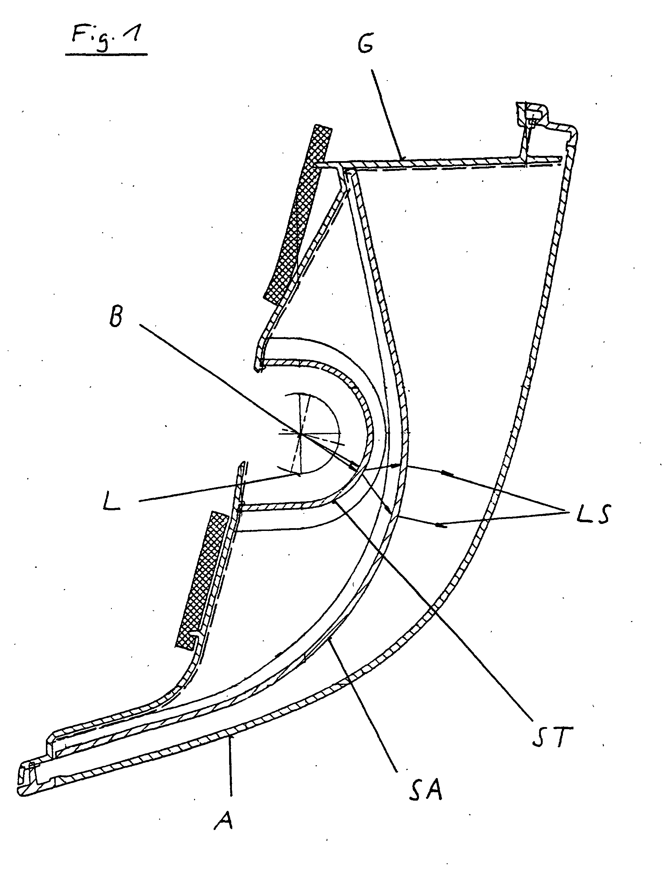

Die Figur 1 zeigt einen horizontalen Schnitt durch eine Fahrzeugleuchte, die ein Gehäuse (G) aufweist, das von einer Abschlußscheibe (A) abgedeckt wird. Die Fahrzeugleuchte kann dabei eine einzelne Lichtfunktion aufweisen oder eine sogenannte Mehrkammerleuchte sein, in der mehrere Lichtfunktionen integriert sind. Bei dem gezeigten Ausführungsbeispiel ist über eine nicht gezeigte Fassungsanordnung eine nur schematisch angedeutete Lichtquelle (L) in dem Gehäuse (G) angeordnet. Die Lichtquelle (L) weist einen Brennpunkt (B) auf und kann weißes oder farbiges Licht abstrahlen.

Die Abschlußscheibe (A) ist optikfrei ausgebildet und aus einem glasklaren oder durchsichtigen gefärbten Kunststoff gefertigt.

In dem Gehäuse (G) ist gegenüber der Abschlußscheibe (A) räumlich zurückversetzt eine lichtsammelnde Linsenanordnung (SA), die als eine Fresnellinse ausgebildet ist, angeordnet. In dem Strahlengang zwischen der Lichtquelle und der lichtsammelnden Linsenanordnung (SA) ist eine lichtstreuende Linsenanordnung (ST) angeordnet. Bei dem hier gezeigten Ausführungsbeispiel ist diese lichtstreuende Linsenanordnung (ST) kappenförmig ausgebildet und umgibt die Lichtquelle, so daß alle wesentlichen In dem Gehäuse (G) ist gegenüber der Abschlußscheibe (A) räumlich zurückversetzt eine lichtsammelnde Linsenanordnung (SA), die als eine Fresnellinse ausgebildet ist, angeordnet. In dem Strahlengang zwischen der Lichtquelle und der lichtsammelnden Linsenanordnung (SA) ist eine lichtstreuende Linsenanordnung (ST) angeordnet. Bei dem hier gezeigten Ausführungsbeispiel ist diese lichtstreuende Linsenanordnung (ST) kappenförmig ausgebildet und umgibt die Lichtquelle, so daß alle wesentlichen Lichtanteile durch die lichtstreuende Linsenanordnung (ST) eine Vorausrichtung bekommen, bevor diese auf die lichtsammelnde Linsenanordnung (SA) auftreffen. Die lichtsammelnde Linsenanordnung (SA) und die lichtstreuende Linsenanordnung (ST) sind dabei derart aufeinander abgestimmt, daß die Fahrzeugleuchte die für die Lichtfunktion erforderliche Lichtverteilung erzeugt. Bei dem hier gezeigten Ausführungsbeispiel erstreckt sich die lichtsammelnde Linsenanordnung (SA) in Form einer Fresnellinse zurückversetzt in dem Gehäuse (G) im wesentlichen über den gesamten Bereich der Fahrzeugleuchte.

Die lichtsammelnde Linsenanordnung (SA) und/oder die lichtstreuende Linsenanordnung (ST) können als Farbfilter ausgebildet sein. In Kombination mit einer glasklaren Abschlußscheibe (A) bzw. einer farbig eingefärbten durchsichtigen Abschlußscheibe (A) und/oder einer glasklaren oder farbigen Lichtquelle ergeben sich somit beliebige farbige Gestaltungsmöglichkeiten der Leuchte in nicht eingeschaltetem Zustand, wobei die Signalfarbe der Lichtfunktion entsprechend den gesetzlichen Vorgaben eingehalten werden kann. Dadurch daß die Erzeugung der Lichtverteilung durch die lichtstreuende Linsenanordnung (ST) und die lichtsammelnde Linsenanordnung (SA) zurückversetzt in dem Gehäuse erzeugt wird und die Abschlußscheibe (A) einen Einblick in die Leuchte ermöglicht, ergibt sich ein brillantes Erscheinungsbild, das die Tiefe der Leuchte vermittelt.

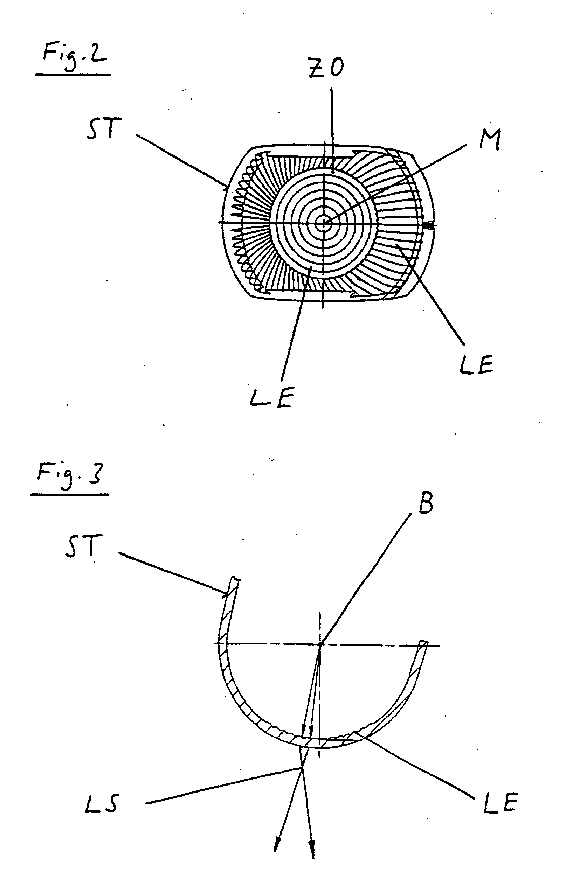

In Figur 2 ist die lichtstreuende Linsenanordnung (ST), die hier beispielhaft kappenförmig ausgebildet ist, in Vorderansicht gezeigt. Diese Linsenanordnung weist beispielhaft einen zentralen Optikbereich (ZO) auf, mit konzentrisch angeordneten, lichtstreuenden Linsenelementen (LE). An den zentralen Optikbereich (ZO) schließt sich ein Bereich mit ebenfalls lichtstreuenden Linsenelementen (LE) an, die sich im wesentlichen in Richtung auf den Mittelpunkt (M) des zentralen Optikbereiches (ZO) hin erstrecken.

Die lichtstreuenden Linsenelemente ((LE) können sowohl als mit Radien versehene Linsenelemente (LE) oder als Prismen ausgebildet sein.

In Figur 3 ist gemäß Figur 2 ein horizontaler Schnitt durch die lichtstreuende Linsenanordnung (ST) gezeigt. Beispielhaft sind mit Ursprung in dem Brennpunkt (B) der nicht gezeigten Lichtquelle (L) zwei Lichtstrahlen (LS) eingezeichnet, die die lichtstreuende Wirkung der Linsenelemente (LE) verdeutlichen. In Figur 1 ist ein vergleichbarer Strahlengang für zwei Lichtstrahlen (LS) eingezeichnet, der zudem die lichtsammelnde Wirkung der lichtsammelnden Linsenanordnung (SA) verdeutlicht.

### Bezugszeichenliste:

- A: Abschlußscheibe
- B: Brennpunkt
- G: Gehäuse
- L: Lichtquelle
- LE: Linsenelemente
- LS: Lichtstrahlen
- M: Mittelpunkt
- SA: lichtsammelnde Linsenanordnung
- ST: lichtstreuende Linsenanordnung
- ZO: zentraler Optikbereich

## Patentansprüche

1. Fahrzeugleuchte mit mindestens einer Lichtfunktion, mit einem Gehäuse (G), mit einer Lichtquelle (L) in dem Gehäuse (G) und mit einer das Gehäuse (G) abschließenden Abschlußscheibe (A), wobei zwischen Lichtquelle (L) und Abschlußscheibe (A) eine lichtsammelnde Linsenanordnung (SA) angeordnet ist, und zwischen der Lichtquelle (L) und der lichtsammelnden Linsenanordnung (SA) eine lichtstreuende Linsenanordnung (ST) angeordnet ist, die lichtsammelnde Linsenanordnung (SA) eine Fresnellinse ist, die gegenüber der Abschlußscheibe (A) räumlich zurückversetzt im Gehäuse (G) angeordnet ist und die lichtstreuende Linsenanordnung (ST) die Lichtquelle (L) kappenförmig umgibt, **dadurch gekennzeichnet, dass** die lichtstreuende Linsenanordnung (ST) einen in Hauptlichtabstrahlrichtung angeordneten zentralen Optikbereich (ZO) mit konzentrisch angeordneten, lichtstreuenden Linsenelementen (LE) aufweist, die lichtstreuende Linsenanordnung (ST) in dem sich an den zentralen Optikbereich (ZO) anschließenden Bereich lichtstreuende Linsenelemente (LE) aufweist, die sich im wesentlichen in Richtung auf den Mittelpunkt (M) des zentralen Optikbereiches (ZO) hin erstrecken und daß die Abschlußscheibe (A) der mindestens einen Lichtfunktion optikfrei ausgebildet ist.

2. Fahrzeugleuchte nach Anspruch 1, **dadurch gekennzeichnet, daß** die optikfreie Abschlußscheibe (A) aus glasklarem Kunststoff gefertigt ist.

3. Fahrzeugleuchte nach einem der vorstehenden Ansprüche, **dadurch gekennzeichnet, daß** die optikfreie klare Abschlußscheibe (A) aus einem farbigen Kunststoff gefertigt ist.

4. Fahrzeugleuchte nach einem der vorstehenden Ansprüche, **dadurch gekennzeichnet, daß** die lichtsammelnde Linsenanordnung (SA) und/oder die lichtstreuende Linsenanordnung (ST) als Farbfilter ausgebildet sind.

5. Fahrzeugleuchte nach einem der vorstehenden Ansprüche, **dadurch gekennzeichnet, daß** die Lichtquelle (L) farbiges Licht abstrahlt.

6. Fahrzeugleuchte nach einem der vorstehenden Ansprüche, **dadurch gekennzeichnet, daß** die Farbfilter und/oder die Lichtquelle (L) in ihrer Filterwirkung zur Erzeugung einer Signalfarbe aufeinander abgestimmt sind.

## Claims

1. A vehicle lamp having at least one lighting function, comprising a housing (G), a light source (L) in the housing (G) and a shield (A) closing the housing (G), a light-collecting lens arrangement (SA) being arranged between the light source (L) and the shield (A) and a light-scattering lens arrangement (ST) being arranged between the light source (L) and the light-collecting lens arrangement (SA), the light-collecting lens arrangement (SA) being a Fresnel lens which is spatially set back in the housing (G) with respect to the shield (A) and the light-scattering lens arrangement (ST) surrounding the light source (L) like a cap, **characterised in that** the light-scattering lens arrangement (ST) has arranged in the main light-emission direction a central optical area (ZO) with concentrically arranged, light-scattering lens elements (LE), the light-scattering lens arrangement (ST) has in the area bordering the central optical area (ZO) light-scattering lens elements (LE) which extend substantially in the direction towards the centre (M) of the central optical area (ZO), and **in that** the shield (A) of the at least one lighting function is configured without a lens system.

2. A vehicle lamp according to Claim 1, **characterised in that** the shield (A) without a lens system is made of transparent plastics material.

3. A vehicle lamp according to either of the preceding claims, **characterised in that** the transparent shield (a) without a lens system is made of a coloured plastics material.

4. A vehicle lamp according to any one of the preceding claims, **characterised in that** the light-collecting lens arrangement (SA) and/or the light-scattering lens arrangement (ST) are configured as a colour filter.

5. A vehicle lamp according to any one of the preceding claims, **characterised in that** the light source (L) emits coloured light.

6. A vehicle lamp according to any one of the preceding claims, **characterised in that** the colour filter and/or the light source (L) are coordinated in their filtering effect to generate a signal colour.

## Revendications

1. Feu de véhicule avec au moins une fonction lumineuse, un boîtier (G), une source lumineuse (L) dans le boîtier (G), et une plaque d'éclairement (A) fermant le boîtier (G), une lentille collectrice de lumière (SA) étant agencée entre la source lumineuse (L) et la plaque d'éclairement (A), et une lentille dispersant la lumière (ST) étant agencée entre la source lumineuse (L) et la lentille collectrice de lumière (SA), la lentille collectrice de lumière (SA) étant une lentille de Fresnel qui est agencée dans le boîtier (G) en retrait dans l'espace par rapport à la plaque d'éclairement (A) et la lentille dispersant la lumière (ST) entourant la source lumineuse (L) à la manière d'une coiffe, **caractérisé en ce que** la lentille dispersant la lumière (ST) présente une zone optique centrale (ZO) agencée dans la direction principale de rayonnement lumineux avec des éléments de lentille dispersant la lumière (LE) agencés de manière concentrique, **en ce que** la lentille dispersant la lumière (ST) présente dans la zone se raccordant à la zone optique centrale (ZO) des éléments de lentille dispersant la lumière (LE) qui s'étendent sensiblement en direction du milieu (M) de la zone optique centrale (ZO), et **en ce que** la plaque d'éclairement (A) de ladite au moins une fonction lumineuse est réalisée exempte d'optique.

2. Feu de véhicule selon la revendication 1, **caractérisé en ce que** la plaque d'éclairement (A) exempte d'optique est réalisée en matière plastique claire comme le verre.

3. Feu de véhicule selon l'une des revendications précédentes, **caractérisé en ce que** la plaque d'éclairement (A) claire exempte d'optique est réalisée en matière plastique colorée.

4. Feu de véhicule selon l'une des revendications précédentes, **caractérisé en ce que** la lentille collectrice de lumière (SA) et/ou la lentille dispersant la lumière (ST) sont réalisées sous forme de filtres colorés.

5. Feu de véhicule selon l'une des revendications précédentes, **caractérisé en ce que** la source lumineuse (L) émet de la lumière colorée.

6. Feu de véhicule selon l'une des revendications précédentes, **caractérisé en ce que** le filtre coloré et/ou la source lumineuse (L) sont adaptés l'un à l'autre dans leur effet filtrant pour engendrer une couleur à effet de signal.
